(19) 

Europäisches
Patentamt

European
Patent Office

Office européen
des brevets

(11) **EP 4 615 088 A1**

(12) **EUROPEAN PATENT APPLICATION**
published in accordance with Art. 153(4) EPC

(43) Date of publication:
**10.09.2025  Bulletin 2025/37**

(21) Application number: **22964522.1**

(22) Date of filing: **31.10.2022**

(51) International Patent Classification (IPC):
*H04W 72/04* (2023.01)     *H04W 8/00* (2009.01)
*H04W 56/00* (2009.01)     *H04W 72/56* (2023.01)

(52) Cooperative Patent Classification (CPC):
H04W 8/00; H04W 56/00; H04W 72/04;
H04W 72/56

(86) International application number:
**PCT/KR2022/016817**

(87) International publication number:
**WO 2024/096143 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **LG Electronics Inc.**
**Yeongdeungpo-gu**
**Seoul 07336 (KR)**

(72) Inventors:
• **JANG, Jihwan**
  **Seoul 06772 (KR)**
• **CHUNG, Jaehoon**
  **Seoul 06772 (KR)**
• **OH, Jaeky**
  **Seoul 06772 (KR)**
• **HE, Yecheng**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **METHOD AND APPARATUS FOR DETERMINING RESOURCE IN WIRELESS COMMUNICATION SYSTEM**

(57)    The objective of the present disclosure is to perform a wireless power procedure by using a first device in a wireless communication system, and an operation method of the first device may comprise the steps of: the first device receiving a synchronization signal from at least one second device and at least one third device; the first device performing, on the basis of the synchronization signal, a synchronization procedure with the at least one second device and the at least one third device; the first device receiving control information from the at least one second device and the at least one third device; the first device confirming scheduling information from the control information; and while moving on the basis of the scheduling information, the first device receiving power from the at least one second device and transmitting the power to the at least one third device.

FIG. 13

α = Max time domain spacing (Radar signal symbol spacing in a communication signal)

## Description

### TECHNICAL FIELD

The following description relates to a wireless communication system, and to a method and device for determining resources in a wireless communication system.

Specifically, a method and device for determining communication resources and radar resources in a joint communication and sensing (JCAS) technology may be provided.

### BACKGROUND ART

Radio access systems have come into widespread in order to provide various types of communication services such as voice or data. In general, a radio access system is a multiple access system capable of supporting communication with multiple users by sharing available system resources (bandwidth, transmit power, etc.). Examples of the multiple access system include a code division multiple access (CDMA) system, a frequency division multiple access (FDMA) system, a time division multiple access (TDMA) system, a single carrier-frequency division multiple access (SC-FDMA) system, etc.

In particular, as many communication apparatuses require a large communication capacity, an enhanced mobile broadband (eMBB) communication technology has been proposed compared to radio access technology (RAT). In addition, not only massive machine type communications (MTC) for providing various services anytime anywhere by connecting a plurality of apparatuses and things but also communication systems considering services/user equipments (UEs) sensitive to reliability and latency have been proposed. To this end, various technical configurations have been proposed.

### DISCLOSURE

### TECHNICAL PROBLEM

The present disclosure relates to a device and method for determining resources in a wireless communication system.

The present disclosure may provide a device and method for determining resources for implementing a JCAS (joint communication and sensing) technology in a wireless communication system.

The present disclosure may provide a device and method for determining communication resources and radar resources in a wireless communication system.

The present disclosure may provide a device and method for determining an interval between radar resource symbols in a wireless communication system.

The technical objectives to be achieved in the present disclosure are not limited to the matters mentioned above, and other technical problems not mentioned may be considered by a person having ordinary knowledge in the technical field to which the technical configuration of the present disclosure is applied from the embodiments of the present disclosure described below.

### TECHNICAL SOLUTION

As an example of the present disclosure, a method for operating a user equipment (UE) in a wireless communication system, the method may include: receiving, from a base station, a synchronization signal block (SSB); performing, based on the SSB, a synchronization procedure with the base station; receiving, from the base station, control information; sensing user environment; determining a radar signal parameter based on requirements related to the user environment; and adaptively determining a resource of the radar signal based on requirements related to the user environment and the radar signal parameter.

As an example of the present disclosure, a method for operating a base station in a wireless communication system, the method may include: transmitting, to a user equipment (UE), a synchronization signal block (SSB); performing, based on the SSB, a synchronization procedure with the UE; transmitting, to the UE, control information; sensing user environment; determining a radar signal parameter based on requirements related to the user environment; and adaptively determining a resource of the radar signal based on requirements related to the user environment and the radar signal parameter.

As an example of the present disclosure, a user equipment (UE) in a wireless communication system, the UE may include: a transceiver; a processor coupled with the transceiver, wherein the processor may be configured to perform operations comprising: receiving, from a base station, a synchronization signal block (SSB); performing, based on the SSB, a synchronization procedure with the base station; receiving, from the base station, control information; sensing user environment; determining a radar signal parameter based on requirements related to the user environment; and adaptively determining a resource of the radar signal based on requirements related to the user environment and the radar signal parameter.

As an example of the present disclosure, a base station in a wireless communication system, the base station may include: a transceiver; a processor coupled with the transceiver, wherein the processor may be configured to perform operations comprising: transmitting, to a user equipment (UE), a synchronization signal block (SSB); performing, based on the SSB, a synchronization procedure with the UE; transmitting, to the UE, control information; sensing user environment; determining a radar signal parameter based on requirements related to the user environment; and adaptively determining a resource of the radar signal based on requirements related to the user environment and the radar signal parameter.

As an example of the present disclosure, a device may include: at least one processor; and at least one computer memory operatively coupled with the at least one processor, wherein the processor may cause the device to: receiving, from a base station, a synchronization signal block (SSB); performing, based on the SSB, a synchronization procedure with the base station; receiving, from the base station, control information; sensing user environment; determining a radar signal parameter based on requirements related to the user environment; and adaptively determining a resource of the radar signal based on requirements related to the user environment and the radar signal parameter.

As an example of the present disclosure, a non-transitory computer-readable storage medium storing at least one instruction, may include at least one instruction executable by a processor, wherein the at least one instruction may be configured to perform operations comprising: receiving, from a base station, a synchronization signal block (SSB); performing, based on the SSB, a synchronization procedure with the base station; receiving, from the base station, control information; sensing user environment; determining a radar signal parameter based on requirements related to the user environment; and adaptively determining a resource of the radar signal based on requirements related to the user environment and the radar signal parameter.

The following examples may be commonly applied.

As an example of the present disclosure, the resource of the radar signal may be determined within the same frequency as the resource of the communication signal to perform joint communication and sensing (JCAS).

As an example of the present disclosure, when the resource of the radar signal is determined, information on the interval between symbols of the radar signal may be updated in a JCAS resource data base.

As an example of the present disclosure, information on the interval between symbols of the radar signal may be updated by a time resource allocation manager.

As an example of the present disclosure, the radar signal parameters may include a minimum subcarrier spacing, a minimum guard interval, a minimum bandwidth, a minimum burst duration, a maximum time domain spacing, and a maximum frequency domain spacing.

As an example of the present disclosure, the user requirement may include parameter values including at least one of data rate, range resolution, velocity resolution, max velocity, and max range.

As an example of the present disclosure, the user requirement may be determined based on a composite sensor of a UE or a base station.

As an example of the present disclosure, the user requirement may be determined based on a previously precoded JCAS resource allocation database (DB).

As an example of the present disclosure, the user requirement may be obtained by user input.

The above-described aspects of the present disclosure are only some of the preferred embodiments of the present disclosure, and various embodiments reflecting the technical features of the present disclosure may be derived and understood by a person having ordinary skill in the art based on the detailed description of the present disclosure described below.

## ADVANTAGEOUS EFFECTS

The following effects may be achieved by embodiments based on the present disclosure.

The present disclosure may provide an advantage of efficiently determining resources in a wireless communication system.

The present disclosure may provide an advantage of improving communication performance and sensing performance by proposing a method of determining communication resources and radar resources for implementing JCAS (joint communication and sensing) in a wireless communication system.

The technical objectives to be achieved in the present disclosure are not limited to the matters mentioned above, and other technical problems not mentioned may be considered by a person having ordinary knowledge in the technical field to which the technical configuration of the present disclosure is applied from the embodiments of the present disclosure described below.

## BRIEF DESCRIPTION OF THE DRAWINGS

The accompanying drawings are provided to help understanding of the present disclosure, and may provide embodiments of the present disclosure together with a detailed description. However, the technical features of the present disclosure are not limited to specific drawings, and the features disclosed in each drawing may be combined with each other to constitute a new embodiment. Reference numerals in each drawing may refer to structural elements.

FIG. 1 shows an example of a communication system according to the present disclosure.
FIG. 2 shows an example of a wireless device according to the present disclosure.
FIG. 3 shows another example of a wireless device according to the present disclosure.
FIG. 4 shows an example of a hand-held device according to the present disclosure.
FIG. 5 shows an example of a car or an autonomous driving car according to the present disclosure.
FIG. 6 shows an example of artificial intelligence (AI) device according to the present disclosure.
FIG. 7 shows a method of processing a transmitted signal according to the present disclosure.

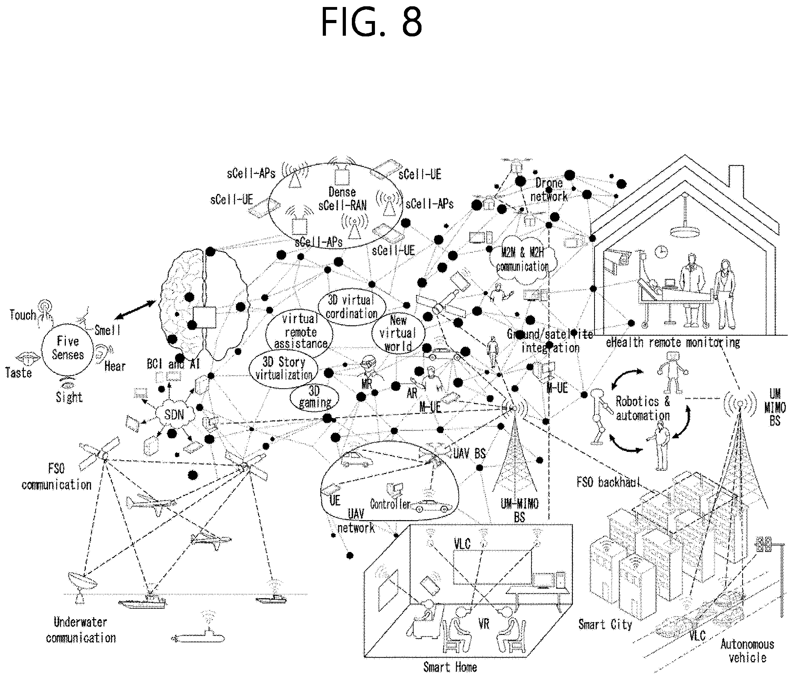

FIG. 8 shows an example of a communication structure providable in a 6th generation (6G) system according to the present disclosure.
FIG. 9 shows an electromagnetic spectrum according to the present disclosure.
FIG. 10 shows a THz communication method according to the present disclosure.
FIG. 11 shows an example of a JCAS system according to an embodiment of the present disclosure.
FIG. 12 shows an example of an integrated waveform according to IEEE 802.11ad according to an embodiment of the present disclosure.
FIG. 13 shows an example of a JCAS time resource determination procedure according to an embodiment of the present disclosure.
FIG. 14 shows an example of user requirements in a traffic monitoring environment according to an embodiment of the present disclosure.
FIG. 15 shows calculated radar signal parameters and corresponding equations in a traffic monitoring environment according to an embodiment of the present disclosure.
FIG. 16 shows an example of a hardware structure of a communication system according to an embodiment of the present disclosure.
FIG. 17 shows an example of a hardware structure of a radar system according to an embodiment of the present disclosure.
FIG. 18 shows an example of a hardware structure of a JCAS system according to an embodiment of the present disclosure.
FIG. 19 shows an example of a JCAS time resource determination procedure according to an embodiment of the present disclosure.

## MODE FOR INVENTION

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. In this case, the term "BS" may be replaced with a fixed station, a Node B, an eNB (eNode B), a gNB (gNode B), an ng-eNB, an advanced base station (ABS), an access point, etc.

In addition, in the embodiments of the present disclosure, the term terminal may be replaced with a user equipment (UE), a mobile station (MS), a subscriber station (SS), a mobile subscriber station (MSS), a mobile terminal, an advanced mobile station (AMS), etc.

In addition, a transmitter is a fixed and/or mobile node that provides a data service or a call service and a receiver is a fixed and/or mobile node that receives a data service or a call service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 38.211, 3GPP TS 38.212, 3GPP TS 38.213, 3GPP TS 38.321 and 3GPP TS 38.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology after TS Release 17 and/or Release 18. "xxx" may refer to a detailed number of a standard document. LTE/NR/6G may be collectively referred to as a 3GPP system.

For background arts, terms, abbreviations, etc. used in the present disclosure, refer to matters described in the standard documents published prior to the present disclosure. For example, reference may be made to the standard documents 36.xxx and 38.XXX.

## Communication System Applicable to the Present Disclosure

Without being limited thereto, various descriptions, functions, procedures, proposals, methods and/or operational flowcharts of the present disclosure disclosed herein are applicable to various fields requiring wireless communication/connection (e.g., 5G).

Hereinafter, a more detailed description will be given with reference to the drawings. In the following drawings/description, the same reference numerals may exemplify the same or corresponding hardware blocks, software blocks or functional blocks unless indicated otherwise.

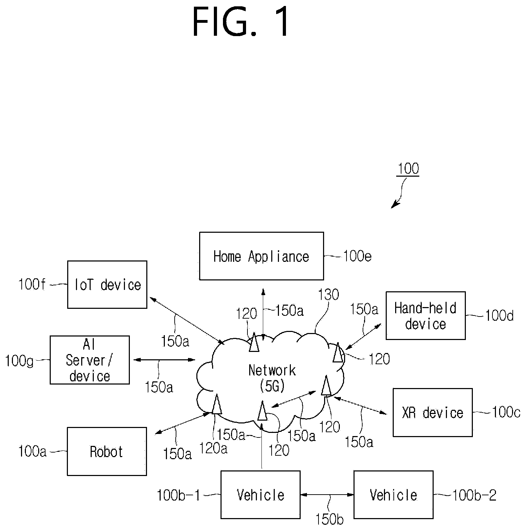

FIG. 1 shows an example of a communication system applicable to the present disclosure.

Referring to FIG. 1, the communication system 100 applicable to the present disclosure includes a wireless device, a base station and a network. The wireless device refers to a device for performing communication using radio access technology (e.g., 5G NR or LTE) and may be referred to as a communication/wireless/5G device. Without being limited thereto, the wireless device may include a robot 100 a, vehicles 100 b-1 and 100 b-2, an extended reality (XR) device 100 c, a hand-held device 100 d, a home appliance 100 e, an Internet of Thing (IoT) device 100 f, and an artificial intelligence (AI) device/server 100 g. For example, the vehicles may include a vehicle having a wireless communication function, an autonomous vehicle, a vehicle capable of performing vehicle-to-vehicle communication, etc. The vehicles 100 b-1 and 100 b-2 may include an unmanned aerial vehicle (UAV) (e.g., a drone). The XR device 100 c includes an augmented reality (AR)/virtual reality (VR)/mixed reality (MR) device and may be implemented in the form of a head-mounted device (HMD), a head-up display (HUD) provided in a vehicle, a television, a smartphone, a computer, a wearable device, a home appliance, a digital signage, a vehicle or a robot. The hand-held device 100 d may include a smartphone, a smart pad, a wearable device (e.g., a smart watch or smart glasses), a computer (e.g., a laptop), etc. The home appliance 100 e may include a TV, a refrigerator, a washing machine, etc. The IoT device 100 f may include a sensor, a smart meter, etc. For example, the base station 120 and the network 130 may be implemented by a wireless device, and a specific wireless device 120 a may operate as a base station/network node for another wireless device.

The wireless devices 100 a to 100 f may be connected to the network 130 through the base station 120. AI technology is applicable to the wireless devices 100 a to 100 f, and the wireless devices 100 a to 100 f may be connected to the AI server 100 g through the network 130. The network 130 may be configured using a 3G network, a 4G (e.g., LTE) network or a 5G (e.g., NR) network, etc. The wireless devices 100 a to 100 f may communicate with each other through the base station 120/the network 130 or perform direct communication (e.g., sidelink communication) without through the base station 120/the network 130. For example, the vehicles 100 b-1 and 100 b-2 may perform direct communication (e.g., vehicle to vehicle (V2V)/vehicle to everything (V2X) communication). In addition, the IoT device 100 f (e.g., a sensor) may perform direct communication with another IoT device (e.g., a sensor) or the other wireless devices 100 a to 100 f.

Wireless communications/ connections 150 a, 150 b and 150 c may be established between the wireless devices 100 a to 100 f/the base station 120 and the base station 120/the base station 120. Here, wireless communication/connection may be established through various radio access technologies (e.g., 5G NR) such as uplink/downlink communication 150 a, sidelink communication 150 b (or D2D communication) or communication 150 c between base stations (e.g., relay, integrated access backhaul (IAB). The wireless device and the base station/wireless device or the base station and the base station may transmit/receive radio signals to/from each other through wireless communication/ connection 150 a, 150 b and 150 c. For example, wireless communication/ connection 150 a, 150 b and 150 c may enable signal transmission/reception through various physical channels. To this end, based on the various proposals of the present disclosure, at least some of various configuration information setting processes for transmission/reception of radio signals, various signal processing procedures (e.g., channel encoding/decoding, modulation/demodulation, resource mapping/demapping, etc.), resource allocation processes, etc. may be performed.

## Communication System Applicable to the Present Disclosure

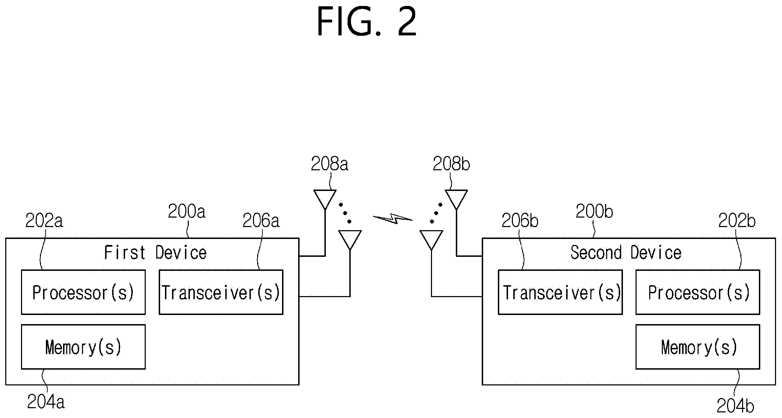

FIG. 2 shows an example of a wireless device applicable to the present disclosure.

Referring to FIG. 2, a first wireless device 200 a and a second wireless device 200 b may transmit and receive radio signals through various radio access technologies (e.g., LTE or NR). Here, (the first wireless device 200 a, the second wireless device 200 b) may correspond to (the wireless device 100 x, the base station 120) and/or (the wireless device 100 x, the wireless device 100 x) of FIG. 1.

The first wireless device 200 a may include one or more processors 202 a and one or more memories 204 a and may further include one or more transceivers 206 a and/or one or more antennas 208 a. The processor 202 a may be configured to perform operations comprising control the memory 204 a and/or the transceiver 206 a and to implement descriptions, functions, procedures, proposals, methods and/or operational flowcharts disclosed herein. For example, the processor 202 a may process information in the memory 204 a to generate first information/signal and then transmit a radio signal including the first information/signal through the transceiver 206 a. In addition, the processor 202 a may receive a radio signal including second information/signal through the transceiver 206 a and then store information obtained from signal processing of the second information/signal in the memory 204 a. The memory 204 a may be coupled with the processor 202 a, and store a variety of information related to operation of the processor 202 a. For example, the memory 204 a may store software code including instructions for performing all or some of the processes controlled by the processor 202 a or performing the descriptions, functions, procedures, proposals, methods and/or operational flowcharts disclosed herein. Here, the processor 202 a and the memory 204 a may be part of a communication modem/circuit/chip designed to implement wireless communication technology (e.g., LTE or NR). The transceiver 206 a may be coupled with the processor 202 a to transmit and/or receive radio signals through one or more antennas 208 a. The transceiver 206 a may include a transmitter and/or a receiver. The transceiver 206 a may be used interchangeably with a radio frequency (RF) unit. In the present disclosure, the wireless device may refer to a communication modem/circuit/chip.

The second wireless device 200 b may include one or more processors 202 b and one or more memories 204 b and may further include one or more transceivers 206 b and/or one or more antennas 208 b. The processor 202 b may be configured to perform operations comprising control the memory 204 b and/or the transceiver 206 b and to implement the descriptions, functions, procedures, proposals, methods and/or operational flowcharts disclosed herein. For example, the processor 202 b may process information in the memory 204 b to generate third information/signal and then transmit the third information/signal through the transceiver 206 b. In addition, the processor 202 b may receive a radio signal including fourth information/signal through the transceiver 206 b and then store information obtained from signal processing of the fourth information/signal in the memory 204 b. The memory 204 b may be coupled with the processor 202 b to store a variety of information related to operation of the processor 202 b. For example, the memory 204 b may store software code including instructions for performing all or some of the processes controlled by the processor 202 b or performing the descriptions, functions, procedures, proposals, methods and/or operational flowcharts disclosed herein. Herein, the processor 202 b and the memory 204 b may be part of a communication modem/circuit/chip designed to implement wireless communication technology (e.g., LTE or NR). The transceiver 206 b may be coupled with the processor 202 b to transmit and/or receive radio signals through one or more antennas 208 b. The transceiver 206 b may include a transmitter and/or a receiver. The transceiver 206 b may be used interchangeably with a radio frequency (RF) unit. In the present disclosure, the wireless device may refer to a communication modem/circuit/chip.

Hereinafter, hardware elements of the wireless devices 200 a and 200 b will be described in greater detail. Without being limited thereto, one or more protocol layers may be implemented by one or more processors 202 a and 202 b. For example, one or more processors 202 a and 202 b may implement one or more layers (e.g., functional layers such as PHY (physical), MAC (media access control), RLC (radio link control), PDCP (packet data convergence protocol), RRC (radio resource control), SDAP (service data adaptation protocol)). One or more processors 202 a and 202 b may generate one or more protocol data units (PDUs) and/or one or more service data unit (SDU) according to the descriptions, functions, procedures, proposals, methods and/or operational flowcharts disclosed herein. One or more processors 202 a and 202 b may generate messages, control information, data or information according to the descriptions, functions, procedures, proposals, methods and/or operational flowcharts disclosed herein. One or more processors 202 a and 202 b may generate PDUs, SDUs, messages, control information, data or information according to the functions, procedures, proposals and/or methods disclosed herein and provide the PDUs, SDUs, messages, control information, data or information to one or more transceivers 206 a and 206 b. One or more processors 202 a and 202 b may receive signals (e.g., baseband signals) from one or more transceivers 206 a and 206 b and acquire PDUs, SDUs, messages, control information, data or information according to the descriptions, functions, procedures, proposals, methods and/or operational flowcharts disclosed herein.

One or more processors 202 a and 202 b may be referred to as controllers, microcontrollers, microprocessors or microcomputers. One or more processors 202 a and 202 b may be implemented by hardware, firmware, software or a combination thereof. For example, one or more application specific integrated circuits (ASICs), one or more digital signal processors (DSPs), one or more digital signal processing devices (DSPDs), programmable logic devices (PLDs) or one or more field programmable gate arrays (FPGAs) may be included in one or more processors 202 a and 202 b. The descriptions, functions, procedures, proposals, methods and/or operational flowcharts disclosed herein may be implemented using firmware or software, and firmware or software may be implemented to include modules, procedures, functions, etc. Firmware or software configured to perform operations comprising perform the descriptions, functions, procedures, proposals, methods and/or operational flowcharts disclosed herein may be included in one or more processors 202 a and 202 b or stored in one or more memories 204 a and 204 b to be driven by one or more processors 202 a and 202 b. The descriptions, functions, procedures, proposals, methods and/or operational flowcharts disclosed herein implemented using firmware or software in the form of code, a command and/or a set of commands.

One or more memories 204 a and 204 b may be coupled with one or more processors 202 a and 202 b to store various types of data, signals, messages, information, programs, code, instructions and/or commands. One or more memories 204 a and 204 b may be composed of read only memories (ROMs), random access memories (RAMs), erasable programmable read only memories (EPROMs), flash memories, hard drives, registers, cache memories, computer-readable storage mediums and/or combinations thereof. One or more memories 204 a and 204 b may be located inside and/or outside one or more processors 202 a and 202 b. In addition, one or more memories 204 a and 204 b may be coupled with one or more processors 202 a and 202 b through various technologies such as wired or wireless connection.

One or more transceivers 206 a and 206 b may transmit user data, control information, radio signals/channels, etc. described in the methods and/or operational flowcharts of the present disclosure to one or more other apparatuses. One or more transceivers 206 a and 206 b may receive user data, control information, radio signals/channels, etc. described in the methods and/or operational flowcharts of the present disclosure from one or more other apparatuses. For example, one or more transceivers 206 a and 206 b may be coupled with one or more processors 202 a and 202 b to transmit/receive radio signals. For example, one or more processors 202 a and 202 b may perform control such that one or more transceivers 206 a and 206 b transmit user data, control information or radio signals to one or more other apparatuses. In addition, one or more processors 202 a and 202 b may perform control such that one or more transceivers 206 a and 206 b receive user data, control information or radio signals from one or more other apparatuses. In addition, one or more transceivers 206 a and 206 b may be coupled with one or more antennas 208 a and 208 b, and one or more transceivers 206 a and 206 b may be configured to perform operations comprising transmit/receive user data, control information, radio signals/channels, etc. described in the descriptions, functions, procedures, proposals, methods and/or operational flowcharts disclosed herein through one or more antennas 208 a and 208 b. In the present disclosure, one or more antennas may be a plurality of physical antennas or a plurality of logical antennas (e.g., antenna ports). One or more transceivers 206 a and 206 b may convert the received radio signals/channels, etc. from RF band signals to baseband signals, in order to process the received user data, control information, radio signals/channels, etc. using one or more processors 202 a and 202 b. One or more transceivers 206 a and 206 b may convert the user data, control information, radio signals/channels processed using one or more processors 202 a and 202 b from baseband signals into RF band signals. To this end, one or more transceivers 206 a and 206 b may include (analog) oscillator and/or filters.

**Structure of Wireless Device Applicable to the Present Disclosure**

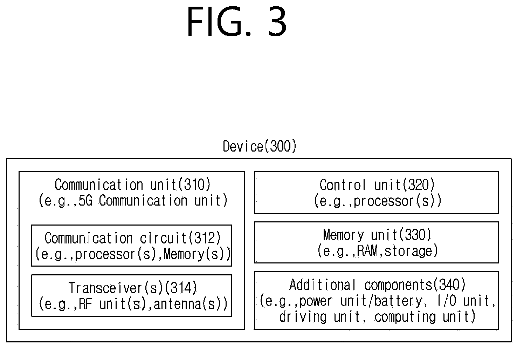

FIG. 3 shows another example of a wireless device applicable to the present disclosure.

Referring to FIG. 3, a wireless device 300 may correspond to the wireless devices 200 a and 200 b of FIG. 2 and include various elements, components, units/portions and/or modules. For example, the wireless device 300 may include a communication unit 310, a control unit (controller) 320, a memory unit (memory) 330 and additional components 340. The communication unit may include a communication circuit 312 and a transceiver(s) 314. For example, the communication circuit 312 may include one or more processors 202 a and 202 b and/or one or more memories 204 a and 204 b of FIG. 2. For example, the transceiver(s) 314 may include one or more transceivers 206 a and 206 b and/or one or more antennas 208 a and 208 b of FIG. 2. The control unit 320 may be electrically coupled with the communication unit 310, the memory unit 330 and the additional components 340 to control overall operation of the wireless device. For example, the control unit 320 may control electrical/mechanical operation of the wireless device based on a program/code/instruction/information stored in the memory unit 330. In addition, the control unit 320 may transmit the information stored in the memory unit 330 to the outside (e.g., another communication device) through the wireless/wired interface using the communication unit 310 over a wireless/wired interface or store information received from the outside (e.g., another communication device) through the wireless/wired interface using the communication unit 310 in the memory unit 330.

The additional components 340 may be variously configured according to the types of the wireless devices. For example, the additional components 340 may include at least one of a power unit/battery, an input/output unit, a driving unit or a computing unit. Without being limited thereto, the wireless device 300 may be implemented in the form of the robot (FIG. 1, 100 a), the vehicles (FIG. 1, 100 b-1 and 100 b-2), the XR device (FIG. 1, 100 c), the hand-held device (FIG. 1, 100 d), the home appliance (FIG. 1, 100 e), the IoT device (FIG. 1, 100 f), a digital broadcast terminal, a hologram apparatus, a public safety apparatus, an MTC apparatus, a medical apparatus, a Fintech device (financial device), a security device, a climate/environment device, an AI server/device (FIG. 1, 140), the base station (FIG. 1, 120), a network node, etc. The wireless device may be movable or may be used at a fixed place according to use example/service.

In FIG. 3, various elements, components, units/portions and/or modules in the wireless device 300 may be coupled with each other through wired interfaces or at least some thereof may be wirelessly coupled through the communication unit 310. For example, in the wireless device 300, the control unit 320 and the communication unit 310 may be coupled by wire, and the control unit 320 and the first unit (e.g., 130 or 140) may be wirelessly coupled through the communication unit 310. In addition, each element, component, unit/portion and/or module of the wireless device 300 may further include one or more elements. For example, the control unit 320 may be composed of a set of one or more processors. For example, the control unit 320 may be composed of a set of a communication control processor, an application processor, an electronic control unit (ECU), a graphic processing processor, a memory control processor, etc. In another example, the memory unit 330 may be composed of a random access memory (RAM), a dynamic RAM (DRAM), a read only memory (ROM), a flash memory, a volatile memory, a non-volatile memory and/or a combination thereof.

**Hand-Held Device Applicable to the Present Disclosure**

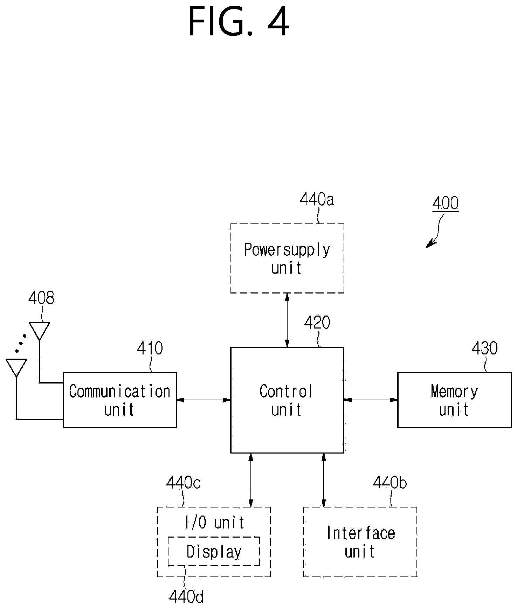

FIG. 4 shows an example of a hand-held device applicable to the present disclosure.

FIG. 4 shows a hand-held device applicable to the present disclosure. The hand-held device may include a smartphone, a smart pad, a wearable device (e.g., a smart watch or smart glasses), and a hand-held computer (e.g., a laptop, etc.). The hand-held device may be referred to as a mobile station (MS), a user terminal (UT), a mobile subscriber station (MSS), a subscriber station (SS), an advanced mobile station (AMS) or a wireless terminal (WT).

Referring to FIG. 4, the hand-held device 400 may include an antenna unit (antenna) 408, a communication unit (transceiver) 410, a control unit (controller) 420, a memory unit (memory) 430, a power supply unit (power supply) 440 a, an interface unit (interface) 440 b, and an input/output unit 440 c. An antenna unit (antenna) 408 may be part of the communication unit 410. The blocks 410 to 430/440 a to 440 c may correspond to the blocks 310 to 330/340 of FIG. 3, respectively.

The communication unit 410 may transmit and receive signals (e.g., data, control signals, etc.) to and from other wireless devices or base stations. The control unit 420 may control the components of the hand-held device 400 to perform various operations. The control unit 420 may include an application processor (AP). The memory unit 430 may store data/parameters/program/code/instructions necessary to drive the hand-held device 400. In addition, the memory unit 430 may store input/output data/information, etc. The power supply unit 440 a may supply power to the hand-held device 400 and include a wired/wireless charging circuit, a battery, etc. The interface unit 440 b may support connection between the hand-held device 400 and another external device. The interface unit 440 b may include various ports (e.g., an audio input/output port and a video input/output port) for connection with the external device. The input/output unit 440 c may receive or output video information/signals, audio information/signals, data and/or user input information. The input/output unit 440 c may include a camera, a microphone, a user input unit, a display 440 d, a speaker and/or a haptic module.

For example, in case of data communication, the input/output unit 440 c may acquire user input information/-signal (e.g., touch, text, voice, image or video) from the user and store the user input information/signal in the memory unit 430. The communication unit 410 may convert the information/signal stored in the memory into a radio signal and transmit the converted radio signal to another wireless device directly or transmit the converted radio signal to a base station. In addition, the communication unit 410 may receive a radio signal from another wireless device or the base station and then restore the received radio signal into original information/signal. The restored information/signal may be stored in the memory unit 430 and then output through the input/output unit 440 c in various forms (e.g., text, voice, image, video and haptic).

## Type of Wireless Device Applicable to the Present Disclosure

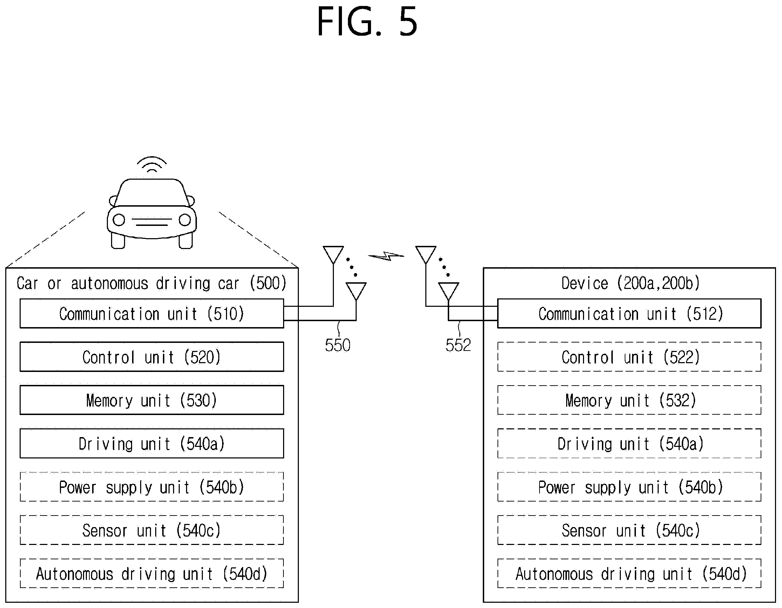

FIG. 5 shows an example of a car or an autonomous driving car applicable to the present disclosure.

FIG. 5 shows a car or an autonomous driving vehicle applicable to the present disclosure. The car or the autonomous driving car may be implemented as a mobile robot, a vehicle, a train, a manned/unmanned aerial vehicle (AV), a ship, etc. and the type of the car is not limited.

Referring to FIG. 5, the car or autonomous driving car 500 may include an antenna unit (antenna) 508, a communication unit (transceiver) 510, a control unit (controller) 520, a driving unit 540 a, a power supply unit (power supply) 540 b, a sensor unit 540 c, and an autonomous driving unit 540 d. The antenna unit 550 may be configured as part of the communication unit 510. The blocks 510/530/540 a to 540 d correspond to the blocks 410/430/440 of FIG. 4.

The communication unit 510 may transmit and receive signals (e.g., data, control signals, etc.) to and from external devices such as another vehicle, a base station (e.g., a base station, a road side unit, etc.), and a server. The control unit 520 may control the elements of the car or autonomous driving car 500 to perform various operations. The control unit 520 may include an electronic control unit (ECU).

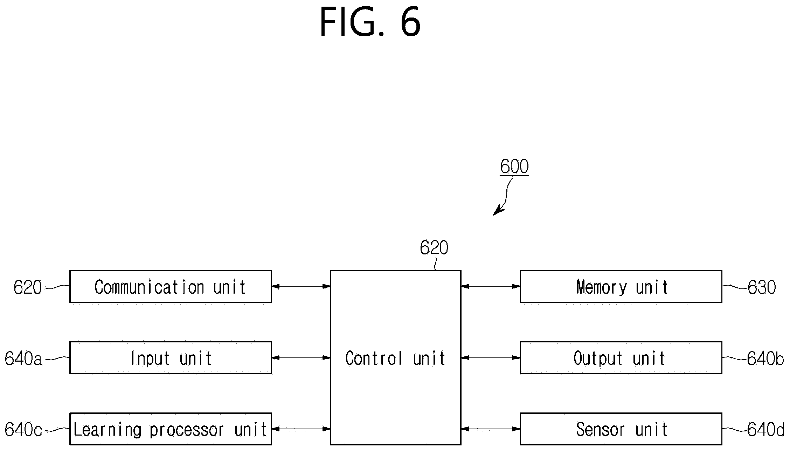

FIG. 6 shows an example of artificial intelligence (AI) device applicable to the present disclosure. For example, the AI device may be implemented as fixed or movable devices such as a TV, a projector, a smartphone, a PC, a laptop, a digital broadcast terminal, a tablet PC, a wearable device, a set-top box (STB), a radio, a washing machine, a refrigerator, a digital signage, a robot, a vehicle, or the like.

Referring to FIG. 6, the AI device 600 may include a communication unit (transceiver) 610, a control unit (controller) 620, a memory unit (memory) 630, an input/output unit 640 a/640 b, a leaning processor unit (learning processor) 640 c and a sensor unit 640 d. The blocks 610 to 630/640 a to 640 d may correspond to the blocks 310 to 330/340 of FIG. 3, respectively.

The communication unit 610 may transmit and receive wired/wireless signals (e.g., sensor information, user input, learning models, control signals, etc.) to and from external devices such as another AI device (e.g., FIG. 1, 100 x, 120 or 140) or the AI server (FIG. 1, 140) using wired/wireless communication technology. To this end, the communication unit 610 may transmit information in the memory unit 630 to an external device or transfer a signal received from the external device to the memory unit 630.

The control unit 620 may determine at least one executable operation of the AI device 600 based on information determined or generated using a data analysis algorithm or a machine learning algorithm. In addition, the control unit 620 may control the components of the AI device 600 to perform the determined operation. For example, the control unit 620 may request, search for, receive or utilize the data of the learning processor unit 640 c or the memory unit 630, and control the components of the AI device 600 to perform predicted operation or operation, which is determined to be desirable, of at least one executable operation. In addition, the control unit 620 may collect history information including operation of the AI device 600 or user's feedback on the operation and store the history information in the memory unit 630 or the learning processor unit 640 c or transmit the history information to the AI server (FIG. 1, 140). The collected history information may be used to update a learning model.

The memory unit 630 may store data supporting various functions of the AI device 600. For example, the memory unit 630 may store data obtained from the input unit 640 a, data obtained from the communication unit 610, output data of the learning processor unit 640 c, and data obtained from the sensing unit 640. In addition, the memory unit 630 may store control information and/or software code necessary to operate/execute the control unit 620.

The input unit 640 a may acquire various types of data from the outside of the AI device 600. For example, the input unit 640 a may acquire learning data for model learning, input data, to which the learning model will be applied, etc. The input unit 640 a may include a camera, a microphone and/or a user input unit. The output unit 640 b may generate video, audio or tactile output. The output unit 640 b may include a display, a speaker and/or a haptic module. The sensing

## EP 4 615 088 A1

unit 640 may obtain at least one of internal information of the AI device 600, the surrounding environment information of the AI device 600 and user information using various sensors. The sensing unit 640 may include a proximity sensor, an illumination sensor, an acceleration sensor, a magnetic sensor, a gyro sensor, an inertia sensor, a red green blue (RGB) sensor, an infrared (IR) sensor, a finger scan sensor, an ultrasonic sensor, an optical sensor, a microphone and/or a radar.

The learning processor unit 640 c may train a model composed of an artificial neural network using training data. The learning processor unit 640 c may perform AI processing along with the learning processor unit of the AI server (FIG. 1, 140). The learning processor unit 640 c may process information received from an external device through the communication unit 610 and/or information stored in the memory unit 630. In addition, the output value of the learning processor unit 640 c may be transmitted to the external device through the communication unit 610 and/or stored in the memory unit 630.

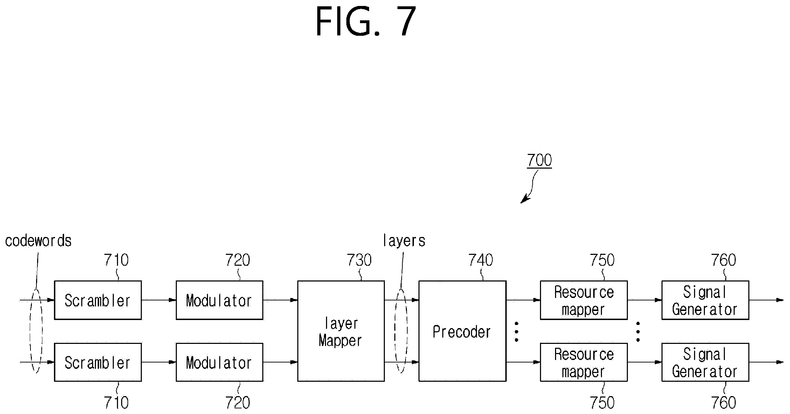

FIG. 7 shows a method of processing a transmitted signal applicable to the present disclosure. For example, the transmitted signal may be processed by a signal processing circuit. At this time, a signal processing circuit 700 may include a scrambler 710, a modulator 720, a layer mapper 730, a precoder 740, a resource mapper 750, and a signal generator 760. At this time, for example, the operation/function of FIG. 7 may be performed by the processors 202 a and 202 b and/or the transceiver 206 a and 206 b of FIG. 2. In addition, for example, the hardware element of FIG. 7 may be implemented in the processors 202 a and 202 b of FIG. 2 and/or the transceivers 206 a and 206 b of FIG. 2. For example, blocks 710 to 760 may be implemented in the processors 202 a and 202 b of FIG. 2. In addition, blocks 710 to 750 may be implemented in the processors 202 a and 202 b of FIG. 2 and a block 760 may be implemented in the transceivers 206 a and 206 b of FIG. 2, without being limited to the above-described embodiments.

A codeword may be converted into a radio signal through the signal processing circuit 700 of FIG. 7. Here, the codeword is a coded bit sequence of an information block. The information block may include a transport block (e.g., a UL-SCH transport block or a DL-SCH transport block). The radio signal may be transmitted through various physical channels (e.g., a PUSCH and a PDSCH). Specifically, the codeword may be converted into a bit sequence scrambled by the scrambler 710. The scramble sequence used for scramble is generated based in an initial value and the initial value may include ID information of a wireless device, etc. The scrambled bit sequence may be modulated into a modulated symbol sequence by the modulator 720. The modulation method may include pi/2-binary phase shift keying (pi/2-BPSK), m-phase shift keying (m-PSK), m-quadrature amplitude modulation (m-QAM), etc.

A complex modulation symbol sequence may be mapped to one or more transport layer by the layer mapper 730. Modulation symbols of each transport layer may be mapped to corresponding antenna port(s) by the precoder 740 (precoding). The output z of the precoder 740 may be obtained by multiplying the output y of the layer mapper 730 by an N*M precoding matrix W. Here, N may be the number of antenna ports and M may be the number of transport layers. Here, the precoder 740 may perform precoding after transform precoding (e.g., discrete Fourier transform (DFT)) for complex modulation symbols. In addition, the precoder 740 may perform precoding without performing transform precoding.

The resource mapper 750 may map modulation symbols of each antenna port to time-frequency resources. The time-frequency resources may include a plurality of symbols (e.g., a CP-OFDMA symbol and a DFT-s-OFDMA symbol) in the time domain and include a plurality of subcarriers in the frequency domain. The signal generator 760 may generate a radio signal from the mapped modulation symbols, and the generated radio signal may be transmitted to another device through each antenna. To this end, the signal generator 760 may include an inverse fast Fourier transform (IFFT) module, a cyclic prefix (CP) insertor, a digital-to-analog converter (DAC), a frequency uplink converter, etc.

A signal processing procedure for a received signal in the wireless device may be configured as the inverse of the signal processing procedures 710 to 760 of FIG. 7. For example, the wireless device (e.g., 200 a or 200 b of FIG. 2) may receive a radio signal from the outside through an antenna port/transceiver. The received radio signal may be converted into a baseband signal through a signal restorer. To this end, the signal restorer may include a frequency downlink converter, an analog-to-digital converter (ADC), a CP remover, and a fast Fourier transform (FFT) module. Thereafter, the baseband signal may be restored to a codeword through a resource de-mapper process, a postcoding process, a demodulation process and a descrambling process. The codeword may be restored to an original information block through decoding. Accordingly, a signal processing circuit (not shown) for a received signal may include a signal restorer, a resource de-mapper, a postcoder, a demodulator, a de-scrambler and a decoder.

## 6G Communication System

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as "intelligent connectivity", "deep connectivity", "holographic connectivity" and "ubiquitous connectivity", and the 6G system may satisfy the requirements shown in Table 1 below. That is, Table 1 shows the requirements of the 6G system.

[Table 1]

| Per device peak data rate | 1 Tbps |
|---|---|
| E2E latency | 1 ms |
| Maximum spectral efficiency | 100 bps/Hz |
| Mobility support | Up to 1000 km/hr |
| Satellite integration | Fully |
| AI | Fully |
| Autonomous vehicle | Fully |
| XR | Fully |
| Haptic Communication | Fully |

At this time, the 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion and enhanced data security.

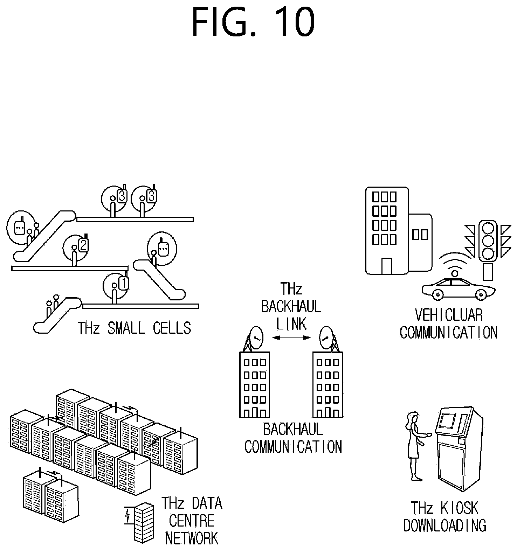

FIG. 10 shows an example of a communication structure providable in a 6G system applicable to the present disclosure.

Referring to FIG. 10, the 6G system will have 50 times higher simultaneous wireless communication connectivity than a 5G wireless communication system. URLLC, which is the key feature of 5G, will become more important technology by providing end-to-end latency less than 1 ms in 6G communication. At this time, the 6G system may have much better volumetric spectrum efficiency unlike frequently used domain spectrum efficiency. The 6G system may provide advanced battery technology for energy harvesting and very long battery life and thus mobile devices may not need to be separately charged in the 6G system.

## Core Implementation Technology of 6G System

- Artificial Intelligence (AI)

Technology which is most important in the 6G system and will be newly introduced is AI. AI was not involved in the 4G system. A 5G system will support partial or very limited AI. However, the 6G system will support AI for full automation. Advance in machine learning will create a more intelligent network for real-time communication in 6G. When AI is introduced to communication, real-time data transmission may be simplified and improved. AI may determine a method of performing complicated target tasks using countless analysis. That is, AI may increase efficiency and reduce processing delay.

Time-consuming tasks such as handover, network selection or resource scheduling may be immediately performed by using AI. AI may play an important role even in M2M, machine-to-human and human-to-machine communication. In addition, AI may be rapid communication in a brain computer interface (BCI). An AI based communication system may be supported by meta materials, intelligent structures, intelligent networks, intelligent devices, intelligent recognition radios, self-maintaining wireless networks and machine learning.

Recently, attempts have been made to integrate AI with a wireless communication system in the application layer or the network layer, but deep learning have been focused on the wireless resource management and allocation field. However, such studies are gradually developed to the MAC layer and the physical layer, and, particularly, attempts to combine deep learning in the physical layer with wireless transmission are emerging. AI-based physical layer transmission means applying a signal processing and communication mechanism based on an AI driver rather than a traditional communication framework in a fundamental signal processing and communication mechanism. For example, channel coding and decoding based on deep learning, signal estimation and detection based on deep learning, multiple input multiple output (MIMO) mechanisms based on deep learning, resource scheduling and allocation based on AI, etc. may be included.

Machine learning may be used for channel estimation and channel tracking and may be used for power allocation, interference cancellation, etc. in the physical layer of DL. In addition, machine learning may be used for antenna selection, power control, symbol detection, etc. in the MIMO system.

However, application of a deep neutral network (DNN) for transmission in the physical layer may have the following problems.

Deep learning-based AI algorithms require a lot of training data in order to optimize training parameters.

However, due to limitations in acquiring data in a specific channel environment as training data, a lot of training data is used offline. Static training for training data in a specific channel environment may cause a contradiction between the diversity and dynamic characteristics of a radio channel.

In addition, currently, deep learning mainly targets real signals. However, the signals of the physical layer of wireless communication are complex signals. For matching of the characteristics of a wireless communication signal, studies on a neural network for detecting a complex domain signal are further required.

Hereinafter, machine learning will be described in greater detail.

Machine learning refers to a series of operations to train a machine in order to build a machine which can perform tasks which cannot be performed or are difficult to be performed by people. Machine learning requires data and learning models. In machine learning, data learning methods may be roughly divided into three methods, that is, supervised learning, unsupervised learning and reinforcement learning.

Neural network learning is to minimize output error. Neural network learning refers to a process of repeatedly inputting training data to a neural network, calculating the error of the output and target of the neural network for the training data, backpropagating the error of the neural network from the output layer of the neural network to an input layer in order to reduce the error and updating the weight of each node of the neural network.

Supervised learning may use training data labeled with a correct answer and the unsupervised learning may use training data which is not labeled with a correct answer. That is, for example, in case of supervised learning for data classification, training data may be labeled with a category. The labeled training data may be input to the neural network, and the output (category) of the neural network may be compared with the label of the training data, thereby calculating the error. The calculated error is backpropagated from the neural network backward (that is, from the output layer to the input layer), and the connection weight of each node of each layer of the neural network may be updated according to backpropagation. Change in updated connection weight of each node may be determined according to the learning rate. Calculation of the neural network for input data and backpropagation of the error may configure a learning cycle (epoch). The learning data is differently applicable according to the number of repetitions of the learning cycle of the neural network. For example, in the early phase of learning of the neural network, a high learning rate may be used to increase efficiency such that the neural network rapidly ensures a certain level of performance and, in the late phase of learning, a low learning rate may be used to increase accuracy.

The learning method may vary according to the feature of data. For example, for the purpose of accurately predicting data transmitted from a transmitter in a receiver in a communication system, learning may be performed using supervised learning rather than unsupervised learning or reinforcement learning.

The learning model corresponds to the human brain and may be regarded as the most basic linear model. However, a paradigm of machine learning using a neural network structure having high complexity, such as artificial neural networks, as a learning model is referred to as deep learning.

Neural network cores used as a learning method may roughly include a deep neural network (DNN) method, a convolutional deep neural network (CNN) method and a recurrent Boltzmman machine (RNN) method. Such a learning model is applicable.

### Terahertz (THz) Communication

THz communication is applicable to the 6G system. For example, a data rate may increase by increasing bandwidth. This may be performed by using sub-THz communication with wide bandwidth and applying advanced massive MIMO technology.

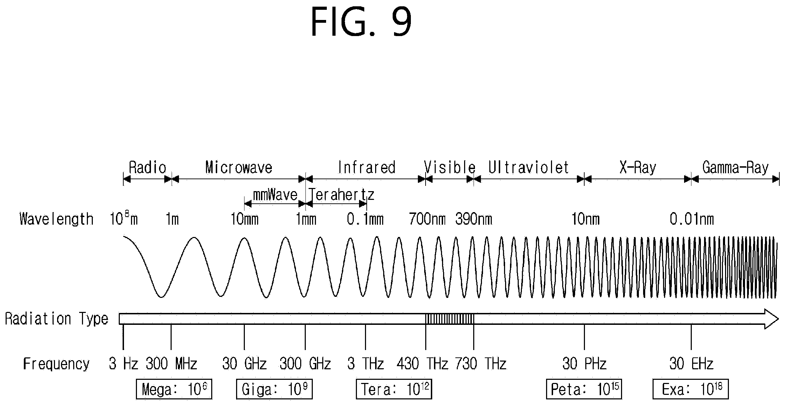

FIG. 9 shows an electromagnetic spectrum applicable to the present disclosure. For example, referring to FIG. 9, THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF.

The main characteristics of THz communication include (i) bandwidth widely available to support a very high data rate and (ii) high path loss occurring at a high frequency (a high directional antenna is indispensable). A narrow beam width generated by the high directional antenna reduces interference. The small wavelength of a THz signal allows a larger number of antenna elements to be integrated with a device and BS operating in this band. Therefore, an advanced adaptive arrangement technology capable of overcoming a range limitation may be used.

### THz Wireless Communication

FIG. 10 shows a THz communication method applicable to the present disclosure.

Referring to FIG. 10, THz wireless communication uses a THz wave having a frequency of approximately 0.1 to 10 THz (1 THz=1012 Hz), and may mean terahertz (THz) band wireless communication using a very high carrier frequency of 100 GHz or more. The THz wave is located between radio frequency (RF)/millimeter (mm) and infrared bands, and (i) transmits non-metallic/non-polarizable materials better than visible/infrared rays and has a shorter wavelength than the RF/millimeter wave and thus high straightness and is capable of beam convergence.

## A specific embodiment of the present disclosure

In the 6G environment, the technological demands for object recognition, location recognition, and location-based services (LBS) in space are increasing in order to provide various services such as the Massive Internet of Things (IoT). Accordingly, joint communication and sensing (JCAS), a technology that integrates communication technology and radar technology, has emerged as a sensing technology. JCAS technology is one of the key 6G technologies that performs positioning and object sensing in space.

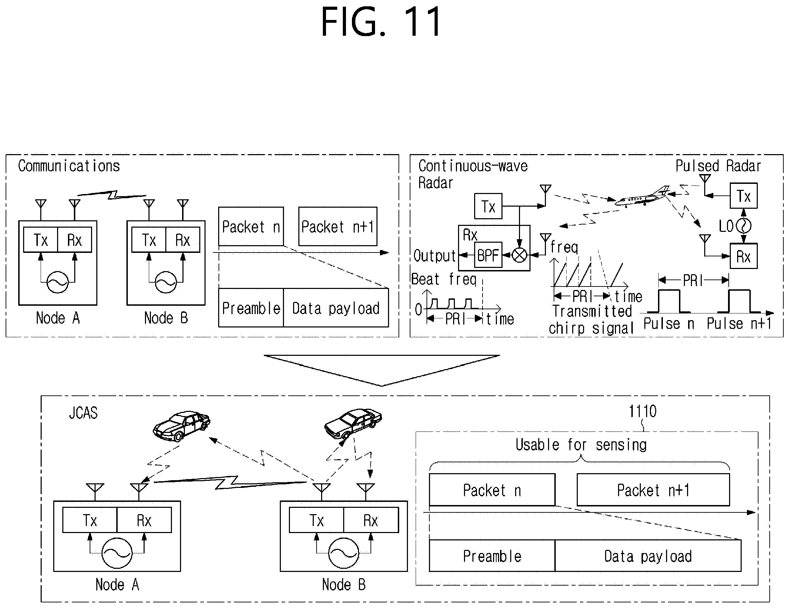

Current communication technology and radar technology are performed by allocating separate frequency resources. For example, JCAS is a technology that combines radar signals with OFDM (orthogonal frequency division multiplexing) packet signals, which are communication signals, and performs sensing by utilizing existing communication network infrastructure. Through this, the efficiency of frequency resources may be increased. In addition, since UE and base station communication and radar technology may be implemented through the same hardware, the cost required for hardware may be reduced. FIG. 11 shows an example of a JCAS system according to an embodiment of the present disclosure. Referring to FIG. 11, a JCAS packet signal (1110) shared by a communication signal and a radar signal may be confirmed.

JCAS technology is an ultra-precise spatial recognition technology that may be applied in various vertical environments (e.g., smart city, smart factory, smart home, vehicular network, etc.). Table 2 below shows detailed application cases of JCAS technology, such as smart home and vehicular network use cases.

[Table 2]

| No | Use Case | |
| --- | --- | --- |
| | Smart Home | Vehicle Network |
| 1 | Human presence detection | Raw data exchange and high-precision localization |
| 2 | Human proximity detection | Secure hands-free access |
| 3 | Fall detection | Vehicle platooning |
| 4 | Sleep monitoring | Simultaneous localization and mapping |
| 5 | Daily activity recognition | Extended Sensor |

Camera image sensing, another spatial sensing technology, has privacy issues, and wireless (e.g. Wi-Fi, BT) indoor positioning technology has limitations in performing precise sensing due to errors in the meter range. In contrast, JCAS implements ultra-precision positioning without privacy issues by combining communication technology and radar technology. In addition, JCAS implements communication technology and radar technology using the same frequency resources and the same hardware (HW) structure, thereby increasing frequency efficiency and providing cost savings. The necessity of JCAS technology is described below.

First, JCAS technology provides spectral efficiency. Spectrum is a scarce resource, so using the same spectrum for sensing and communications is more efficient than using dedicated spectrum for each. Sharing spectrum to implement wireless and radar technologies may ideally double spectral efficiency.

Second, JCAS technology provides ultra-precision positioning services. Cellular systems are becoming ubiquitous as density increases and are being used in vertical industries. Accordingly, JCAS technology enables RF sensing over a wide area through common infrastructure and spectrum reuse.

Third, JCAS technology provides high-resolution detection capabilities. Signal bandwidths are increasing across generations, from 20 MHz carriers in LTE, to 100 MHz in sub-6 GHz 5G NR, to 400 MHz in mmWave NR. New bands for 5G evolution and 6G are expected to have even higher bandwidths, exceeding 1 GHz.

Fourth, JCAS technology addresses privacy concerns. RF signals are less invasive than cameras, which are not allowed to be installed everywhere. RF signals also propagate well in conditions that are difficult for real-world cameras and other sensors to detect, such as dust, bad weather, or poorly lit environments, especially at night.

Fifth, JCAS significantly improves wireless sensing performance through Massive MIMO deployment and spatial processing technologies, which are key components of 5G.

Sixth, JCAS generates the foundation for the required dual-function processing capabilities by leveraging signal processing assets including MIMO and artificial intelligence/machine learning (AI/ML). Recent advances in artificial intelligence (AI) and machine learning (ML) for communications systems pave the way for AI/ML to become an integral part of 5G (B5G) and 6G and beyond system designs.

Seventh, JCAS reduces costs. Compared to operating two separate systems for communications and radar technology, a joint system may significantly reduce the cost and size of the transceiver.

For example, due to the limited data packet size, it is important to secure optimal performance in JCAS technology by appropriately allocating the time resources required for each communication technology and radar technology. In addition, as vertical services expand in various ways, service requirements differ according to space, so it is important to allocate resources according to each communication performance, radar performance, and KPI target balance.

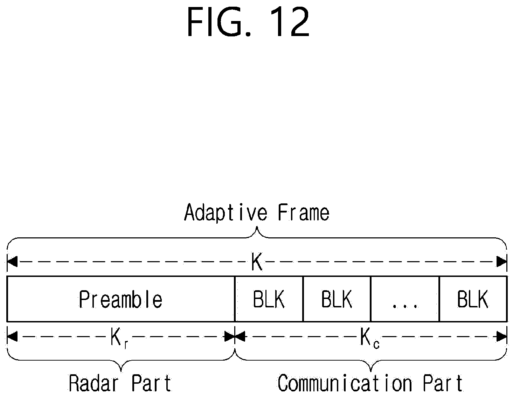

For example, when integrating communication technology and sensor technology, an integrated waveform according to IEEE 802.1 1ad may be used. FIG. 12 shows an example of an integrated waveform according to IEEE 802.11ad according to an embodiment of the present disclosure. At this time, when the length of the preamble is long, the accuracy of the radar increases, but the data rate decreases. For example, when the length of the preamble is short, the accuracy of the radar decreases, but the data rate becomes faster than when the length of the preamble is long. In other words, there is a trade-off between the data rate and the accuracy of the radar. In general, the communication performance is determined by the data rate, and the radar performance is determined by the Cramer-Rao lower bound (CRLB). The lower the CRLB value, the better the radar performance. The trade-off between the data rate and the accuracy of the radar is as shown in the following Equation 1.

[Equation 1]

$$\alpha = \frac{K_c}{K}$$

In Equation 1, Kc is the number of data symbols per frame, and K is the total number of symbols per frame. According to Equation 1, when the amount of data is constant, the value of a increases as the preamble length decreases, so the maximum spectral efficiency of the waveform is as shown in Equation 2 below.

[Equation 2]

$$r = \alpha \log_2(1 + SNR_c)$$

In Equation 2, SNRc is the signal-to-noise ratio of the communication receiver. The CRLB of the range resolution is as follows in Equation 3. $B_x = B/\sqrt{12}$ is when a flat spectrum is assumed.

[Equation 3]

$$\sigma_\rho^2 \geq \frac{c^2}{32\pi^2 B_s^2 (1-\alpha) K SNR_r}$$

In Equation 3, SNRr is the SNR of the radar receiver, c is the speed of light, and the root mean square bandwidth of the preamble. CRLB of speed resolution is given in Equation 4 below.

[Equation 4]

$$\sigma_v^2 \geq \frac{6\lambda^2}{16\pi^2 (1-\alpha)^3 K^3 T_s^2 SNR_r}$$

In Equation 4, $\lambda$ is the wavelength of the carrier and Ts is the symbol duration.

As may be seen from the above equations, as the value of a increases, the communication data rate increases, but as the CRLB also increases, the radar performance decreases. Therefore, it appears as an important issue to reasonably resolve the trade-off between the communication rate and the radar accuracy. Accordingly, the present disclosure proposes a new method for dynamically allocating resources for JCAS, thereby providing the advantage of securing spatial sensing (e.g., object distance, velocity, and position sensing) performance and communication performance within a limited data size.

In addition, in order to implement communication technology and radar technology using limited resources (e.g., time resource data packet size), the optimized requirements and target KPIs are bound to vary according to the user environment and user requirements. Therefore, this disclosure proposes a JCAS time resource allocation method based on user requirements.

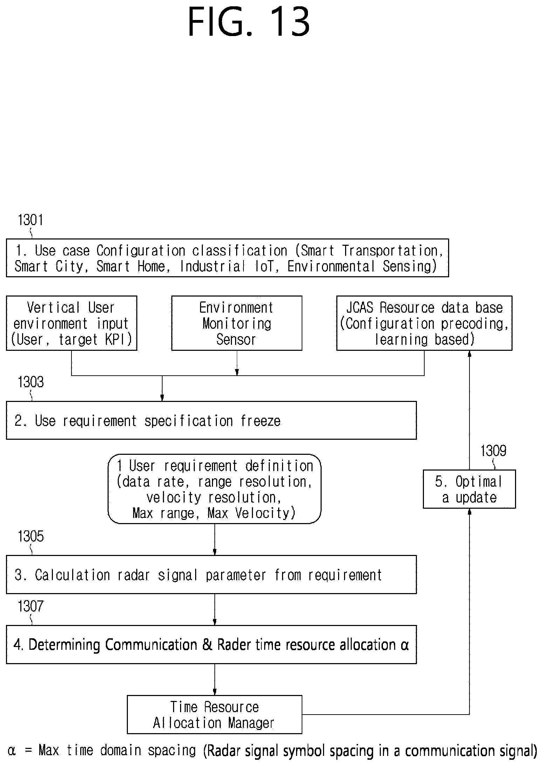

FIG. 13 shows an example of a JCAS time resource determination procedure according to an embodiment of the present disclosure.

Referring to FIG. 13, in step S1301, the device senses user environment. The user environment may include smart transportation, smart city, smart home, industrial IoT, environmental sensing, etc. The device may receive data from other devices or sense the user environment based on sensors.

In step S1303, the device determines user requirements according to the user environment. The user requirements may vary according to the applied vertical environment. For example, the user requirements according to the user environment may be determined by user input (e.g., requirement information according to target KPI). For example, the user requirements may be determined based on a composite sensor (e.g., camera, temperature, humidity, vibration, geomagnetic sensor) of the UE or base station. For example, the user requirements may be determined based on a JCAS resource allocation database (DB) that has been learned and precoded in a previous different environment.

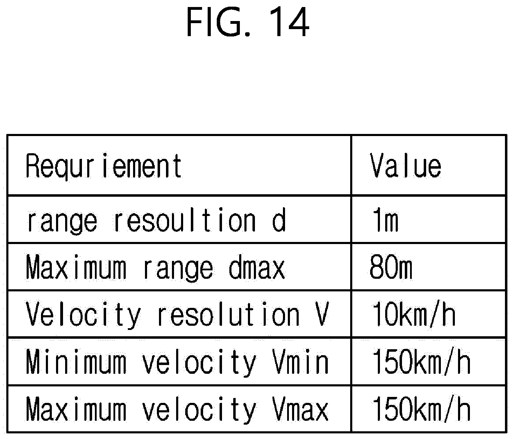

The parameter values for the user requirements may include at least one of data rate, range resolution, velocity resolution, max velocity, and max range. FIG. 14 shows an example of user requirements in a traffic monitoring environment according to an embodiment of the present disclosure.

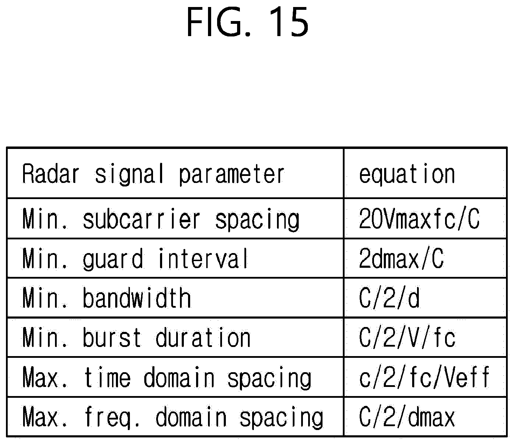

In step S1305, the device calculates radar signal parameters based on user requirements. For example, the radar signal parameters may include minimum subcarrier spacing, minimum guard interval, minimum bandwidth, minimum burst duration, maximum time domain spacing, maximum frequency domain spacing, etc. FIG. 15 shows calculated radar signal parameters and corresponding equations in a traffic monitoring environment according to an embodiment of the present disclosure.

The minimum subcarrier spacing may be calculated by the following Equation 5, the minimum guard interval may be calculated by the following Equation 6, the minimum bandwidth may be calculated by the following Equation 7, the minimum burst duration may be calculated by the following Equation 8, the maximum time domain spacing may be calculated by the following Equation 9, and the maximum frequency domain spacing may be calculated by the following Equation 10.

[Equation 5]

$$\text{Min. subcarrier spacing} = 20 V_{max} f_c / C$$

In Equation 5, $V_{max}$ is the maximum velocity, $f_c$ is the carrier frequency, and c is the speed of light.

[Equation 6]

$$\text{Min. guard interval} = 2 d_{max} / c$$

In Equation 6, $d_{max}$ is the maximum range and c is the speed of light.

[Equation 7]

$$\text{Min. bandwidth} = c/2/\Delta d$$

In Equation 7, c is the speed of light and $\Delta d$ is the range resolution.

[Equation 8]

$$\text{Min. burst duration} = c/2/\Delta d / f_c$$

In Equation 8, c is the speed of light, $\Delta v$ is the velocity resolution, and $f_c$ is the carrier frequency.

[Equation 9]

$$\text{Max. time domain spacing} = c/2/f_c / v_{eff}$$

In Equation 9, c is the speed of light, $f_c$ is the carrier frequency, and $v_{eff}$ is the effective speed range obtained by subtracting the minimum speed from the maximum speed.

[Equation 10]

$$\text{Max. freq. domain spacing} = c/2/d_{max}$$

In Equation 10, c is the speed of light and $d_{max}$ is the maximum range.

In step S1307, the device determines the interval value of radar signal symbols based on the calculated radar signal parameters. The interval of radar signal symbols is the interval between symbols utilized as radar resources in a communication signal. As an example, the interval value of radar signal symbols may be the value a of FIG. 12. The device may determine the interval value of radar signal symbols by determining the communication resources and radar resources based on the radar signal parameters.

In step S1309, the device may update the interval values of radar signal symbols in the JCAS resource data base. The JCAS resource data base is data that stores information necessary for implementing JCAS technology. If there is no existing data on the interval values of radar signal symbols, the device may store the interval values of radar signal symbols in the JCAS resource data base. If there is existing data on the interval values of radar signal symbols, the interval values of new radar signal symbols may be updated. At this time, the device may perform the update by using a time resource allocation manager. The time resource allocation manager may be an entity that determines the time resources of communication signals and radar signals to perform JCAS.

The device may optimally determine communication resources and radar resources in the JCAS system by repeatedly performing steps S1301 to S1309.

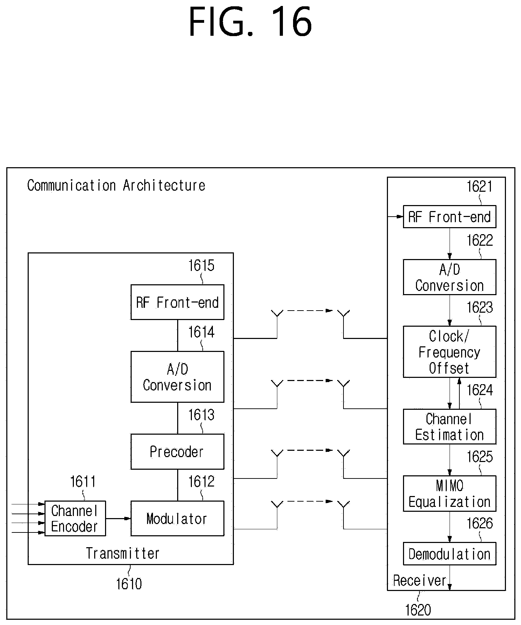

FIG. 16 shows an example of a hardware structure of a communication system according to an embodiment of the present disclosure.

Referring to FIG. 16, the hardware of the communication system may include a transmitter (1610) and a receiver (1620). For example, the transmitter (1610) may include a channel encoder (1611), a modulator (1612), a precoder (1613), an analog to digital conversion module (1614), and an RF front-end (1615). For example, the receiver (1620) may include an RF front-end (1621), an A/D conversion module (1622), a clock/frequency offset module (1623), a channel estimation module (1624), a MIMO equalization (multiple-input multiple-output equalization) (1625), and a demodulation (1626).

The channel encoder (1611) is a module that inserts an error check bit (e.g., parity bit) into the information data to find and correct errors. The modulator (1612) is a module that raises a low frequency signal to a high frequency and transmits it through an antenna. The precoder (1613) is a module that performs beamforming to support multi-stream transmission in multi-antenna wireless communication. The A/D conversion module (1614, 1622) is a module that converts an analog signal, such as sound captured by a microphone or light entering a digital camera, into a digital signal. The RF front-end (1615, 1621) is a module that includes all components between the antenna and the RF transceiver, and may realize Wi-Fi, networking, file transfer, communication, card swiping, positioning, and other functions. The RF front-end module may be represented by Bluetooth, cellular, NFC, GPS, etc. The clock/frequency offset module (1623) is a module that generates a difference between the actual frequency used and the nominal frequency used with a slight change in the frequency of the carrier to prevent interference on the receiving side when it is necessary to install many wireless stations that transmit carriers of the same frequency. The channel estimator (1624) is a module that estimates changes in the symbol (e.g., amplitude change, phase change) due to the channel through which the transmission symbol passes. The MIMO equalizer (1625) is a module that changes and alleviates the shape of the received signal that has been changed by noise, distortion, dispersion, etc. The demodulator (1626) is a module that restores the modulated signal from the vibration or wavelength generated by the modulation, and may lower the high-frequency signal to a frequency that may be heard by humans.

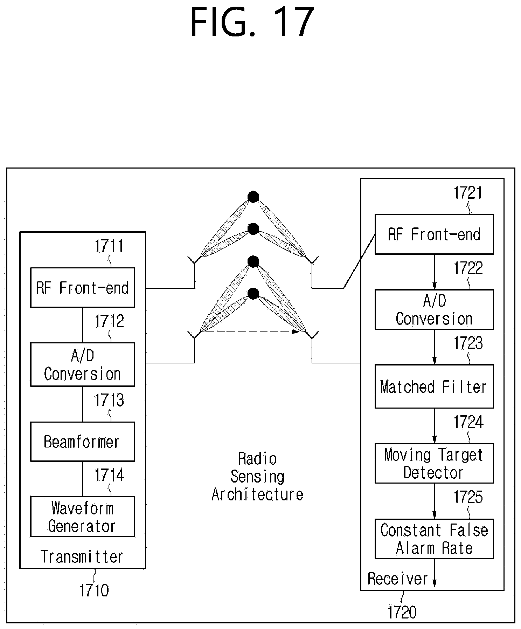

FIG. 17 shows an example of a hardware structure of a radar system according to an embodiment of the present disclosure.

Referring to FIG. 17, the hardware of the radar system may include a transmitter (1710) and a receiver (1720). For example, the transmitter (1710) may include an RF front-end (1711), an A/D conversion module (1712), a beamformer (1713), and a waveform generator (1714). For example, the receiver (1720) may include an RF front-end (1721), an A/D conversion module (1722), a matched filter (1723), a moving target detector (1724), and a constant false alarm rate module (1725).

The RF front-end (1711, 1721) is a module that includes all components between the antenna and the RF transceiver, and may realize Wi-Fi, networking, file transfer, communication, card swiping, positioning, and other functions. The A/D conversion module (1712, 1722) is a module that converts analog signals, such as sound captured by a microphone or light entering a digital camera, into digital signals. The beamformer (1713) is a module that forms a beam. The waveform generator (1714) is a module that generates a waveform that matches the signal. The matched filter (1723) is a linear filter that maximizes the ratio of the square mean of the signal component at a certain point in the output to that of the noise component for inputs where noise is superimposed on the signal. The moving target detector (1724) is a module that detects a moving target. The constant false alarm rate module (1725) is a module that determines the rate at which the frequency of false target detection remains constant despite fluctuations in noise, clutter, etc. included in the received signal.

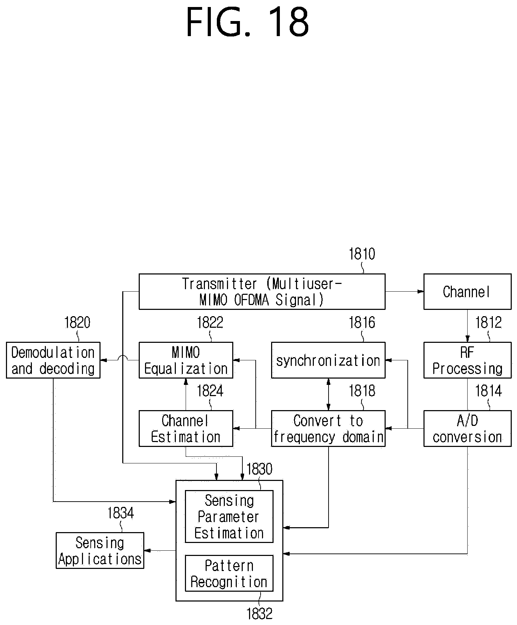

FIG. 18 shows an example of a hardware structure of a JCAS system according to an embodiment of the present disclosure.

Referring to FIG. 18, the hardware of the JCAS system may include modules common to both communications and radar technologies, modules used only for communications technologies, and modules used only for radar technologies.

Modules commonly used in communication technology and radar technology may include a MIMO Orthogonal Frequency Division Multiple Access (OFDMA) signal transmitter (1810), an RF processing module (1812), an AD conversion module (1814), a synchronization module (1816), a frequency conversion processing unit (1818), etc. Modules used only in communication technology may include a modulation and decoding module (1820), a MIMO equalization (1822), a channel estimator (1824), etc. Modules used only in radar technology may include a sensing parameter estimation module (1830), a pattern recognition module (1832), and a sensing application (1834). The sensing parameter estimation module (1830) may measure sensing parameters related to position and movement speed, such as time delay, angle-of-arrival (AoA), angle-of-departure (AoD), Doppler frequency, and magnitude of a multipath signal. The pattern recognition module (1832) may perform application-oriented object, motion, and event recognition and classification by combining machine learning and signal processing techniques using wireless signals. The sensing application (1834) may support smart transportation, smart city, smart home, industrial IoT, environmental sensing, and sensing-assisted communication.

The hardware structure illustrated in the above FIG. 16, FIG. 17, and FIG. 18 is only an example for convenience of explanation and is not limited thereto, and the depicted modules may be omitted or other modules may be added.

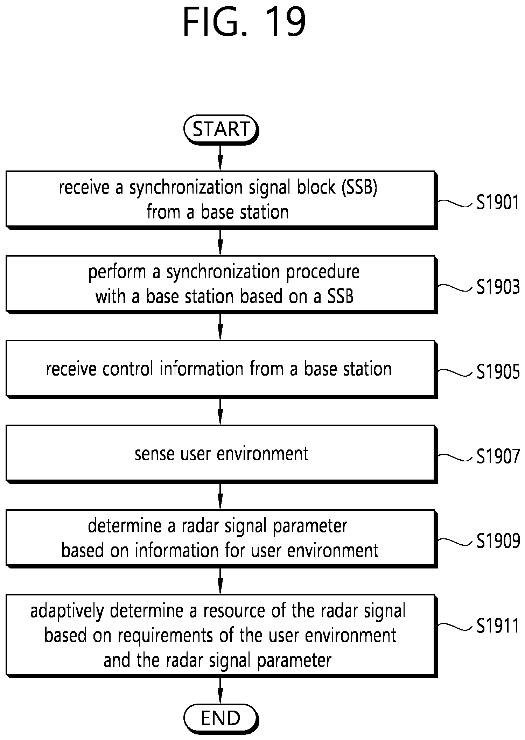

FIG. 19 shows an example of a JCAS time resource determination procedure according to an embodiment of the present disclosure.

Referring to FIG. 19, in step S1901, the device may receive a synchronization signal block (SSB) from the base station. In step S1903, the device may perform a synchronization procedure with the base station based on the SSB. In step S1905, the device may receive control information from the base station.

In step S1907, the device may sense user environment. the device may receive data from another device or sense the user environment based on a sensor. For example, the device may use control information to sense the user environment.

In step S1909, the device may determine a radar signal parameter based on information for the user environment. The information for the user environment is information for user requirements according to the user environment. For example, the user requirements according to the user environment may be determined by user input (e.g., requirement information according to target KPI). For example, the user requirements may be determined based on a composite sensor (e.g., camera, temperature, humidity, vibration, geomagnetic sensor) of the UE or base station. For example, the user requirements may be determined based on a JCAS resource allocation database (DB) that has been learned and precoded in a previous different environment.

Radar signal parameters are values determined based on user requirements. For example, radar signal parameters may include minimum subcarrier spacing, minimum guard interval, minimum bandwidth, minimum burst duration, maximum time domain spacing, maximum frequency domain spacing, etc.

In step S1911, the device may adaptively determine a resource of the radar signal based on requirements of the user environment and the radar signal parameter. The device may determine the interval value between radar signal symbols using the radar signal parameters. The device may determine the resource of the radar signal using the interval value between radar signal symbols. Thereafter, the device may store the interval value between radar signal symbols in the JCAS resource database.

According to the present disclosure, time resources for performing JCAS may be adaptively allocated based on requirements according to user environment.

The present disclosure may be embodied in other specific forms without departing from the technical ideas and essential features described in the present disclosure. Therefore, the above detailed description should not be construed as limiting in all aspects but should be considered as illustrative. The scope of the present disclosure should be determined by a reasonable interpretation of the appended claims, and all changes within the equivalent scope of the present disclosure are included in the scope of the present disclosure. In addition, claims that do not have an explicit citation relationship in the patent claims may be combined to form an embodiment or included as a new claim by a post-filing amendment.

INDUSTRIAL AVAILABILITY

The embodiments of the present disclosure are applicable to various radio access systems. Examples of the various radio access systems include a 3rd generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

**Claims**

1.  A method for operating a first device in a wireless communication system, the method comprising:

    receiving, from at least one second device and at least one third device, a synchronization signal;
    performing, based on the synchronization signal, a synchronization procedure with the at least one second device and the at least one third device;
    receiving, from the at least one second device and the at least one third device, control information;
    checking scheduling information from the control information; and
    receiving, from the at least one second device, power and transmitting, to the at least one third device while moving, p ower, based on the scheduling information.

2.  The method of claim 1, further comprising:
    storing surplus power after the transmission of the power to the at least one third device.

3.  The method of claim 1,
    wherein the control information includes at least one of information related to supply power, information related to de mand power, information related to distance, information related to power source type, wireless power type, and information related to wireless power frequency.

4.  The method of claim 1,
    wherein the checking the scheduling information from the control information comprises:

    determining a priority of the at least one second device and a priority of the at least one third device, and
    wherein the priority is determined based on distance from the first device, amount of power that is available, amount o f power that is required, type of power source, type of wireless power, and wireless power frequency.

5.  The method of claim 1,
    wherein the checking the scheduling information from the control information further comprises:
    configuring, based on the priority of the at least one second device and the priority of the at least one third device, a m ovement path.

6.  The method of claim 1, further comprising:
    transmitting a broadcast signal for triggering a registration request of the at least one second device and the at least on e third device.

7.  The method of claim 1, further comprising:
    scanning, by detecting signals transmitted from the at least one second device and the at least one third device, neighb oring devices.

8.  The method of claim 1, further comprising:
    activating a coordinator function based on user input.

9.  A first device in a wireless communication system, the first device comprising:

    a transceiver;
    circuit for receiving power; and
    a processor coupled with the transceiver and the circuit,
    wherein the processor is configured to perform operations comprising:

    receiving, from a second device, a capability information request for the first device;
    transmitting, to the second device, capability information of the first device;
    receiving, if the first device is a device having semantic communication capability based on the capability information of the first device, from the second device, semantic communication-related information;
    generating, based on the semantic communication-related information, a semantic communication signal; and
    transmitting, to the second device, the semantic communication signal and information for performing weakly labelin g,

wherein the semantic communication signal is generated using shared information and the information for performing the weakly labeling,

wherein the weakly labeling is an operation of providing a weak label to semantic data using the shared information a nd auxiliary information, and

wherein an update of the shared information is performed based on an operation of a downstream task performed by t he second device.

10. A first device comprising:

at least one processor; and
at least one computer memory coupled with the at least one processor and storing instructions that, based on being exe cuted by the at least one processor, cause operations,
wherein the operations comprising:

receiving, from a second device, a capability information request for the first device;
transmitting, to the second device, capability information of the first device;
receiving, if the first device is a device having semantic communication capability based on the capability information of the first device, from the second device, semantic communication-related information;
generating, based on the semantic communication-related information, a semantic communication signal; and
transmitting, to the second device, the semantic communication signal and information for performing weakly labelin g,
wherein the semantic communication signal is generated using shared information and the information for performing the weakly labeling,
wherein the weakly labeling is an operation of providing a weak label to semantic data using the shared information a nd auxiliary information, and
wherein an update of the shared information is performed based on an operation of a downstream task performed by t he second device.

11. A non-transitory computer-readable storage medium storing at least one instruction, comprising at least one instruction executable by a processor,
wherein the at least one instruction is configured to perform operations comprising:

receiving, from a second device, a capability information request for the first device;
transmitting, to the second device, capability information of the first device;
receiving, if the first device is a device having semantic communication capability based on the capability information of the first device, from the second device, semantic communication-related information;
generating, based on the semantic communication-related information, a semantic communication signal; and
transmitting, to the second device, the semantic communication signal and information for performing weakly labelin g,
wherein the semantic communication signal is generated using shared information and the information for performing the weakly labeling,
wherein the weakly labeling is an operation of providing a weak label to semantic data using the shared information a nd auxiliary information, and
wherein an update of the shared information is performed based on an operation of a downstream task performed by t he second device.

# FIG. 1

# FIG. 2

# FIG. 3

Device(300)

| Communication unit(310)<br>(e.g.,5G Communication unit) | Control unit(320)<br>(e.g.,processor(s)) |
|---|---|
| Communication circuit(312)<br>(e.g.,processor(s),Memory(s)) | Memory unit(330)<br>(e.g.,RAM,storage) |
| Transceiver(s)(314)<br>(e.g.,RF unit(s),antenna(s)) | Additional components(340)<br>(e.g.,power unit/battery, I/O unit,<br>driving unit, computing unit) |

EP 4 615 088 A1

# FIG. 4

440a

400

Power supply
unit

408

410

420

430

Communication
unit

Control
unit

Memory
unit

440c

440b

I/O unit

Display

Interface
unit

440d

23

# FIG. 5

# FIG. 6

EP 4 615 088 A1

$\underline{600}$

| 620~ | Communication unit | ⟷ | | ⟷ | Memory unit | ~630 |
| 640a~ | Input unit | ⟷ | Control unit | ⟷ | Output unit | ~640b |
| 640c~ | Learning processor unit | ⟷ | | ⟷ | Sensor unit | ~640d |

620

# FIG. 7

EP 4 615 088 A1

# FIG. 8

# FIG. 9

EP 4 615 088 A1

# FIG. 10

THz SMALL CELLS

THz BACKHAUL LINK

BACKHAUL COMMUNICATION

VEHICLUAR COMMUNICATION

THz DATA CENTRE NETWORK

THz KIOSK DOWNLOADING

# FIG. 11

# FIG. 12

Adaptive Frame

K

| Preamble | BLK | BLK | ... | BLK |

$K_r$

$K_c$

Radar Part | Communication Part

# FIG. 13

1301

| 1. Use case Configuration classification (Smart Transportation, Smart City, Smart Home, Industrial IoT, Environmental Sensing) |

| Vertical User environment input (User, target KPI) | Environment Monitoring Sensor | JCAS Resource data base (Configuration precoding, learning based) |

1303

| 2. Use requirement specification freeze |

1 User requirement definition (data rate, range resolution, velocity resolution, Max range, Max Velocity)

1309

| 5. Optimal a update |

1305

| 3. Calculation radar signal parameter from requirement |

1307

| 4. Determining Communication & Rader time resource allocation $\alpha$ |

| Time Resource Allocation Manager |

$\alpha$ = Max time domain spacing (Radar signal symbol spacing in a communication signal)

# FIG. 14

| Requriement | Value |
|---|---|
| range resoultion d | 1m |
| Maximum range dmax | 80m |
| Velocity resolution V | 10km/h |
| Minimum velocity Vmin | 150km/h |
| Maximum velocity Vmax | 150km/h |

# FIG. 15

| Radar signal parameter | equation |
|---|---|
| Min. subcarrier spacing | 20Vmaxfc/C |
| Min. guard interval | 2dmax/C |
| Min. bandwidth | C/2/d |
| Min. burst duration | C/2/V/fc |
| Max. time domain spacing | c/2/fc/Veff |
| Max. freq. domain spacing | C/2/dmax |

# FIG. 16

# FIG. 17

Radio Sensing Architecture

**Transmitter**
1710

- RF Front-end — 1711
- A/D Conversion — 1712
- Beamformer — 1713
- Waveform Generator — 1714

**Receiver**
1720

- RF Front-end — 1721
- A/D Conversion — 1722
- Matched Filter — 1723
- Moving Target Detector — 1724
- Constant False Alarm Rate — 1725

# FIG. 18

1810

Transmitter (Multiuser-MIMO OFDMA Signal) → Channel

1820      1822      1816      1812

Demodulation and decoding ← MIMO Equalization ← synchronization ← RF Processing

1824      1818      1814

Channel Estimation ← Convert to frequency domain ← A/D conversion

1830

Sensing Parameter Estimation

1834

Sensing Applications ← Pattern Recognition

1832

# FIG. 19

START

receive a synchronization signal block (SSB)
from a base station — S1901

perform a synchronization procedure
with a base station based on a SSB — S1903

receive control information from a base station — S1905

sense user environment — S1907

determine a radar signal parameter
based on information for user environment — S1909

adaptively determine a resource of the radar signal
based on requirements of the user environment
and the radar signal parameter — S1911

END

## INTERNATIONAL SEARCH REPORT

| International application No. |
| --- |
| **PCT/KR2022/016817** |

| A. | CLASSIFICATION OF SUBJECT MATTER |
| --- | --- |

**H04W 72/04**(2009.01)i; **H04W 8/00**(2009.01)i; **H04W 56/00**(2009.01)i; **H04W 72/56**(2023.01)i

According to International Patent Classification (IPC) or to both national classification and IPC

| B. | FIELDS SEARCHED |
| --- | --- |

Minimum documentation searched (classification system followed by classification symbols)

H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: JCAS, 동기 신호(synchronization signal), 제어(control), 스케줄링(scheduling), 전력(power)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X<br>Y<br>A | ZHANG, J. Andrew et al. Enabling Joint Communication and Radar Sensing in Mobile Networks - A Survey. arXiv:2006.07559v4 [eess.SP]. October 2021.<br>    See pages 1-41 and figure 9. | 1,3,6-11<br>2<br>4-5 |
| Y | LIU, Ziang et al. Joint Transmit and Receive Beamforming Design in Full-Duplex Integrated Sensing and Communications. ResearchGate. 20 October 2022.<br>    See pages 1-12. | 2 |
| A | NEMATI, Mahyar et al. Toward Joint Radar, Communication, Computation, Localization, and Sensing in IoT. ResearchGate. 05 January 2022.<br>    See pages 1-16. | 1-11 |
| A | LIU, Fan et al. Joint Radar and Communication Design: Applications, State-of-the-art, and the Road Ahead. IEEE Transactions on Communications. Vol. 68, Issue: 6, 14 February 2020.<br>    See pages 1-30. | 1-11 |

☑ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 July 2023** | **24 July 2023** |

| Name and mailing address of the ISA/KR | Authorized officer |
| --- | --- |
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2022/016817**

### C.    DOCUMENTS CONSIDERED TO BE RELEVANT

| Category* | Citation of document, with indication, where appropriate, of the relevant passages | Relevant to claim No. |
|---|---|---|
| A | THOMA, Reiner et al. Joint Communication and Radar Sensing: An Overview. Conference: 15th European Conference on Antennas and Propagation (EuCAP). March 2021. See pages 1-5. | 1-11 |

Form PCT/ISA/210 (second sheet) (July 2022)